# EUROPÄISCHE PATENTSCHRIFT

(11) **EP 1 576 679 B1**
(45) Veröffentlichungstag und Bekanntmachung des Hinweises auf die Patenterteilung: **19.07.2006**
(21) Anmeldenummer: 03813900.2
(22) Anmeldetag: 19.12.2003
(51) Int. Cl.: H01M 4/20, H01M 4/62

(54) **ADDITIV ZUR HERSTELLUNG DER POSITIVEN AKTIVEN MASSE FÜR BLEIAKKUMULATOREN EIN VERFAHREN ZU DESSEN HERSTELLUNG UND DESSEN VERWENDUNG**
ADDITIVE FOR PRODUCING THE POSITIVE ACTIVE MATERIAL FOR LEAD STORAGE BATTERIES, A METHOD FOR THE PRODUCTION THEREOF AND ITS USE
ADDITIF DESTINE A LA PRODUCTION DE LA MATIERE ACTIVE POSITIVE D'ACCUMULATEURS AU PLOMB, SON PROCEDE DE PRODUCTION ET SON UTILISATION

(30) Priorität: 24.12.2002 DE 10261049; 06.03.2003 DE 10309842
(43) Veröffentlichungstag der Anmeldung: 21.09.2005
(73) Patentinhaber: Penox GmbH, 51063 Köln (DE); Nitsche, Werner, 59558 Lippstadt (DE)
(72) Erfinder: NITSCHE, Werner, 59558 Lippstadt (DE); KLEIN, Ian, 38667 Bad Harzburg (DE)
(74) Vertreter: Hagemann, Heinrich
(86) Internationale Anmeldenummer: PCT/EP2003/014590
(87) Internationale Veröffentlichungsnummer: WO 2004/059772

(56) Entgegenhaltungen:
- EP-A- 0 592 028
- EP-A- 1 223 627
- FR-A- 2 767 224
- US-A- 4 415 410
- WERTZ J. A. ET AL.: "Development of advanced lead acid batteries for electric vehicles. The use of additives to increase performance and extend life. I. AGM cells" BATTERY CONFERENCE ON APPLICATIONS AND ADVANCES, 1999. THE FOURTEENTH ANNUAL LONG BEACH, CA, USA 12-15 JAN. 1999, PISCATAWAY, NJ, USA,IEEE, US, 12. Januar 1999 (1999-01-12), Seiten 189-195, XP010352783 ISBN: 0-7803-4967-9
- MCGREGOR K.: "Active-material additives for high-rate lead/acid batteries: have there been any positive advances?" JOURNAL OF POWER SOURCES, Bd. 59, Nr. 1, 4. März 1996 (1996-03-04), Seiten 31-43, XP004044551 ISSN: 0378-7753
- DIETZ H. ET AL.: "The effect of additives on the positive lead-acid battery electrode" JOURNAL OF POWER SOURCES, Bd. 14, Nr. 4, April 1985 (1985-04), Seiten 305-319, XP002292938 ISSN: 0378-7753
- PATENT ABSTRACTS OF JAPAN Bd. 0122, Nr. 07 (E-621), 14. Juni 1988 (1988-06-14) & JP 63 006743 A (SHIN KOBE ELECTRIC MACH CO. LTD.), 12. Januar 1988 (1988-01-12)
- PATENT ABSTRACTS OF JAPAN Bd. 0176, Nr. 98 (E-1481), 20. Dezember 1993 (1993-12-20) & JP 5 242887 A (SHIN KOBE ELECTRIC MACH CO. LTD.), 21. September 1993 (1993-09-21)

## Beschreibung

Die Erfindung betrifft ein Additiv zur Herstellung der positiven aktiven Masse für Bleiakkumulatoren auf der Basis feinteiligen 4-basischen Bleisulfats, ein Verfahren zur Herstellung dieses Additivs sowie die Verwendung des Additivs zu dem genannten Zweck.

Nach dem Stand der Technik werden die positiven Platten bei der Herstellung von Bleiakkumulatoren nach der Pastierung der Gitter mit der positiven aktiven Masse in sogenannten Reifungs- und Trocknungskammern in Chargen oder kontinuierlich gereift und getrocknet. Aus den Hauptinhaltsstoffen in Form von Bleioxid, Wasser sowie Bleisulfat werden durch die Reifung 3-basische (3PbOPbSO₄) und/oder 4-basische (4PbOPbSO₄) Bleifsulfate gebildet. Die Platten werden überwiegend in Stapeln auf Paletten ohne Auflockerung gelegt. Seltener werden sie auf Paletten ohne Auflockerung gestellt oder im speziellen Fall von Doppelgittern mit außenliegenden Fahnen locker in Gestelle gehängt.

Für die Reifung zu 3-basischem Bleisulfat mit Kristallgrößen < 10µm ist es gängige Praxis, die Platten bei etwa 55°C über einen Zeitraum von 12 bis 24 Stunden zu reifen und anschließend zu trocknen. Je nach dem verwendeten Oxid sowie der gewünschten Restfeuchte dauert die Trocknung bis zu einigen Tagen.

Abhängig von den chemischen und physikalischen Bedingungen findet im Temperaturbereich von 60 bis 70°C ein Phasenübergang von der Bildung von 3-basischem zur Bildung von 4-basischem Bleisulfat statt. Für die Reifung zu 4-basischem Bleisulfat werden die Platten nach gängiger Praxis einige Stunden im Wasserdampf bei einer Temperatur von üblicherweise > 80°C gereift und anschließend, wie bei 3-basisch gereiften Platten, getrocknet. Ein wesentlicher Nachteil bei einer derartigen Reifung unter Wasserdampf ist die Entstehung von grobkristallinen 4-basischen Bleisulfatkristallen, wobei Kristallgrößen > 50 µm auftreten können.

Die gereifte aktive Masse der positiven Platten wird während der nachfolgenden Formation elektrochemisch zu Bleidioxid umgewandelt. Die Umwandlung der basischen Bleisulfate gestaltet sich mit zunehmender Kristallgröße aufwendiger und langwieriger. Die benötigte elektrische Energiemenge zur Umwandlung einer grobkristallinen Struktur ist um mehr als 25% höher als diejenige einer kleinkristallinen Struktur. Hier soll unter "kleinkristalliner Struktur" ein Material verstanden werden, bei dem die Kristallgröße < 10 µm ist. Bei einer großkristallinen Struktur liegen Kristalle > 30 µm vor. Zur vollständigen Formierung sind darüber hinaus Standzeiten einzulegen. Durch die Einbringung der höheren Energiemenge und die Notwendigkeit von einzulegenden Standzeiten nimmt die Formation von grobkristallinem 4-basischen Bleisulfat in der Regel eine wesentlich längere Zeit in Anspruch.

Die Reifung zu 4-basischen Bleisulfaten ist vorteilhaft bei Bleiakkumulatoren mit antimonfreien Legierungen für die positiven Gitter. Bleiakkumulatoren mit antimonfreien Legierungen für die positiven Gitter und 4-basisch gereiften, positiven aktiven Massen weisen eine stabile Kapazität bei zyklischer Belastung auf und haben eine deutlich verlängerte Lebensdauer. Bleiakkumulatoren mit antimonhaltigen Legierungen der positiven Gitter werden zunehmend durch antimonfreie Gitter ersetzt, da diese Bleiakkumulatoren darüber hinaus eine längere Lagerfähigkeit sowie einen sichtlich geringeren Wasserverbrauch aufweisen.

Aus diesem Grund besteht ein großes Interesse an Verfahren sowie Möglichkeiten, positive Platten zu kleinkristallinem 4-basischen Bleisulfat zu reifen. Nach dem Stand der Technik sind hierzu zwei Verfahren herauszustellen:

Nach einer üblichen Fertigungspraxis werden die Platten zunächst 3-basisch gereift und auf vorteilhafterweise unter 0,5 Gew.-% Restfeuchte getrocknet. Anschließend erfolgt eine mehrstündige Wasserdampfbehandlung bei Temperaturen von üblicherweise > 80°C. Während dieser Phase wird das 3-basiche Bleisulfat in 4-basisches Bleisulfat umgewandelt. Die Kristallgröße bleibt hierbei nahezu unverändert, sofern die Feuchte während der Wasserdampfbehandlung der Platten etwa 2 Gew.-% nicht überschreitet. Bei zu feuchten Platten tritt ein Wachstum zu grobkristallinem 4-basischen Bleisulfat auf. Bei einem ordnungsgemäß ausgeführten Verfahren liegen nach einer anschließenden erneuten Trocknung Platten mit kleinkristallinem 4-basischen Bleisulfat vor. Ein großer Nachteil dieses Verfahrens besteht in der langen Prozesszeit. Darüber hinaus ist die Paste-Gitter-Anbindung schlechter als bei den im Wasserdampf unmittelbar zu grobkristallinem 4-basischen Bleisulfat gereiften positiven Platten. Die Größe der Kristalle des 4-basischen Bleisulfats kann nicht gesteuert werden und liegt bei Kristallgrößen < 3 µm. Dies kann bei zyklischer Tiefentladung von nassen Bleiakkumulatoren zu einer irreparablen Schädigung der positiven Elektroden und somit zur Verkürzung der Gebrauchsdauer der Bleiakkumulatoren führen.

In einem zweiten bekannten Verfahren wird der aktiven positiven Masse während des Herstellungsprozesses zuvor kleingemahlenes 4-basisches Bleisulfat zugegeben. Die Reifung erfolgt in der gleichen Weise wie bei der angesprochenen Reifung zu grobkristallinem 4-basischen Bleisulfat unter Wasserdampf und vorzugsweise bei Temperaturen oberhalb 80°C. Die zugegebenen kleingemahlenen 4-basischen Bleisulfatkristalle von < 1 µm Durchmesser wirken als Keimbildner und erlauben vereinzelten Platten ein gezieltes Kristallwachstum zu einer kleinkristallinen 4-basischen Kristallstruktur. Dieses Verfahren wird vorzugsweise kontinuierlich durchgeführt.

Der Nachteil dieses Verfahrens ist die Notwendigkeit, eine Auflockerung der Platten z.B. durch Hängen von Doppelplatten auf Abstand oder durch eine Klimamembran zwischen Einzelplatten. Es ist heutige gängige Praxis bei der Herstellung von Platten von Bleiakkumulatoren, diese nach der Pastierung ohne Abstandshalter in Stapeln abzustapeln und im Stapel zu reifen. Die Notwendigkeit einer Vereinzelung der Platten stellt somit einen erheblichen Mehraufwand dar. So können die heutigen Anlagen und Techniken für die Plattenherstellung nicht ohne neue Zusatzeinrichtungen bzw. erheblichen Änderungen genutzt werden. Die Auflockerung der Platten durch Zwischenräume oder Klimamembranen führt zu mehr Platzbedarf, wodurch das Fassungsvermögen an Platten bei bestehenden Reifungs- und Trocknungskammern erheblich reduziert wird.

Bei der Konferenz *"Battery Conference on Applications and Advances 1999*, *14th annual" in Long Beach, Kalifornien, USA, vom 12. bis 15. Januar 1999,* wurde die Verwendung von verschiedenen Zusatzstoffen zur Verbesserung der Leistung und Verlängerung der Lebensdauer von Bleiakkumulatoren offenbart. Unter diesen Zusatzstoffen wurde ein anorganisches Additiv bestehend größtenteils aus Kieselsäure in Elektrodenpasten basierend auf tetrabasischem Bleisulfat beschrieben.
In *Journal of Power Sources, Bd. 59, Nr. 1, 4. März 1996, Seiten 31-43* sowie in *Journal of Power Sources, Bd. 14, Nr. 4, April 1985, Seiten 305-319* wird ebenfalls die Wirkung von verschiedenen Additiven auf positive Elektroden für Bleiakkumulatoren offenbart. Der Einsatz von Kieselgel als Additiv zur Veränderung der Porosität in positiven Elektrodenpasten wird beispielsweise beschrieben.
Die japanischen Patentanmeldungen *JP 63 006 743 A* und *JP 5 242 887 A* beschreiben die Herstellung von positiven Elektrodenplatten für Bleiakkumulatoren, wobei die pastöse aktive Masse durch Vermischung von Bleioxiden (wie Pb₃O₄) mit tribasischem Bleisulfat und feinteiliger Kieselsäure erhalten wird.
In *US-A-4 415 410* wir ein Verfahren zur Herstellung von Batterienplatten oder Elektroden aus tetrabasischem Bleisulfat offenbart, wobei in der Elektrodenpaste Bleioxid in Pulverform zu dem tetrabasischen Bleisulfat zugegeben wird.
Die europäische Patentanmeldung *EP-A-0 592 028* beschreibt ein Verfahren zur Herstellung von Elektrodenplatten für Bleiakkumulatoren, wobei eine Vorläufermischung enthaltend Bleioxiden (wie Pb₃O₄), metallisches Blei und Bleisulfate derart behandelt wird, dass die dadurch erhaltene Elektrodenpaste tribasisches und tetrabasisches Bleisulfat enthält.

Der Erfindung liegt die Aufgabe zugrunde, die im Zusammenhang mit dem Stand der Technik aufgezeigten Probleme zu beheben, insbesondere einen technischen Vorschlag zu unterbreiten, wie Platten in Stapeln zu feinkristallinem 4-basischen Bleisulfat gereift werden können.

Erfindungsgemäß wird diese Aufgabe durch ein Additiv zur Herstellung der positiven aktiven Masse für Bleiakkumulatoren auf der Basis feinteiligen 4-basischem Bleisulfats gelöst, das dadurch gekennzeichnet ist, dass es ein 4-basisches Bleisulfat einer mittleren Teilchengröße von weniger als etwa 3 µm sowie zur Verhinderung der Agglomeration der Teilchen des 4-basischen Bleisulfats feinteilige Kieselsäure enthält.

Es hat sich bei dem Einsatz des erfindungsgemäßen Additivs gezeigt, dass dann besonders gute Effekte und Vorteile erzielbar sind, wenn die mittlere Teilchengröße des 4-basischen Bleisulfats insbesondere weniger als etwa 1,5 µm beträgt. Der Rahmen von etwa 0,2 bis 0,9 µm erweist sich als besonders vorteilhaft. Ein Unterschreiten des Wertes von 0,2 µm würde wirtschaftlich keinen Vorteil bringen. Mit zunehmender mittlerer Teilchengröße muß die Menge an Additiv erhöht werden, so dass auch hier aus wirtschaftlichen Gründen ein Überschreiten des oberen Wertes vermieden werden sollte.

Eine zu feine Teilchengröße der Kieselsäure ist vorzugsweise zu vermeiden. Dabei hat sich gezeigt, daß die im Handel erhältlichen feinteiligen Kieselsäuren dann von besonderem Vorteil sind, wenn deren spezifische Oberfläche nach BET weniger als 300 m²/g, insbesondere weniger als 150 m²/g beträgt. Die im Handel erhältlichen feinteiligen Kieselsäuren werden üblicherweise durch die Angabe der spezifische Oberfläche in der Typenbezeichnung klassifiziert. Vor allem kann eine Korrelation zwischen den Angaben zur spezifischen Oberfläche der feinteiligen Kieselsäure und den entsprechenden Teilchengrößen im alkalischen Bereich, der bei der Herstellung der aktiven Massen vorliegt, vorgenommen werden.

Die mittlere Teilchengröße der eingesetzten feinteiligen Kieselsäuren liegt bei einer derartigen Betrachtungsweise zweckmäßigerweise in dem Bereich zwischen etwa 10 und 120 nm, insbesondere zwischen etwa 20 und 80 nm, wobei der Bereich von etwa 40 bis 60 nm besonders vorteilhaft ist. Wird der Wert von etwa 10 nm unterschritten, dann stellt sich nicht die gewünschte Wirkung im Hinblick auf die Vermeidung der Agglomeration der Teilchen des 4-basischen Bleisulfats ein. Der Wert von 120 nm könnte in Einzelfällen auch prinzipiell überschritten werden, wenngleich die wünschenswerten Effekte in dem angesprochenen Rahmen von etwa 40 bis 60 nm am besten in Erscheinung treten.

Wenn die Teilchen zu klein sind, dann führt dies dazu, dass während der Reifung eine breite Kornverteilung von 4-basischen Bleisulfatkristallen unterschiedlicher Kristallgröße auftritt. Bei Verwertung derartiger Kieselsäuren können 4-basische Bleisulfatkristalle einer Teilchengröße von größer als 10 µm nicht vermieden werden. Diese treten teils einzeln verteilt, teils in Nestern auf und können Kristallgrößen erreichen, wie sie üblicherweise bei zu grobkristallinen gereiften Platten zu finden sind. In dem angesprochene Rahmen der Teilchengröße von insbesondere etwa 20 bis 80 nm und ganz besonders von etwa 40 bis 60 nm wird die Agglomeration der feingemahlenen 4-basischen Impfkristalle verhindert. Darüber hinaus wird es gewährleistet, dass sehr homogene feinkristalline 4-basische Bleisulfatkristallstrukturen bei der Reifung entstehen. Die Endgröße der 4-basischen Bleisulfatkristalle wird durch die Menge an zugegebenem Mikrosulfat gesteuert. Aus wirtschaftlichen Gründen hat es sich für Bleiakkumulatoren mit freier Schwefelsäure als Elektrolyten als vorteilhaft erwiesen, die Menge derartig festzulegen, dass eine kleinkristalline 4-basische Kristallstruktur mit Kristallgrößen in einer Bandbreite von etwa 5 bis 10 µm erzielt wird. Für eine derartige Verteilung ist eine einfache Formation möglich. Bei verschlossenen Bleiakkumulatoren mit festgelegtem Elektrolyten in Gelen oder mikroporösem Glasvlies kann eine Verschiebung zu kleineren Kristallgrößen unter Erhöhung der Menge an Mikrosulfat vorteilhaft sein. Als Richtwerte können bei Zugabe von etwa 0,5 bis 3,0 Gew.-% der erfindungsgemäßen Aufschlämmung die Kristallgrößen des 4-basischen Bleisulfates nach der Reifung der aktiven Masse im Bereich von etwa 2 bis 10 µm gesteuert werden. Aus wirtschaftlichen Gründen wird vorgeschlagen die Menge an Aufschlämmung so festzulegen, daß für (a) sogenannte nasse Bleiakkumulatoren Kristallgrößen von etwa 5 bis 10 µm durch Zugabe von etwa 0,5 bis 2% Aufschlämmung und für (b) verschlossene Batterien von etwa 2 bis 5 µm durch Zugabe von etwa 2 bis 3 Gew. -% erhalten werden. Demzufolge wird der wünschenswerte Effekt durch die Menge an zugegebenem Mikrosulfat und nicht durch Prozessparameter gemäß üblichem Vorgehen gesteuert (Temperatur, Feuchte und Zeit).

Im Rahmen der Erfindung unterliegt der Fachmann bezüglich der Auswahl der feinteiligen Kieselsäure keiner wesentlichen Einschränkung. Vorzugsweise werden jedoch pyrogene Kieselsäuren eingesetzt, und zwar "hydrophobe" und / oder "hydrophile" Qualitäten.

Bezüglich des Mengenverhältnisses von basischem Bleisulfat und feinteiliger Kieselsäure in dem erfindungsgemäßen Additiv gibt es keine kritische Begrenzung. Selbstverständlich muß der Anteil an feinteiliger Kieselsäure so hoch gewählt werden, dass der wünschenswerte Effekt der Verhinderung der Agglomeration der Teilchen des 4-basischen Bleisulfats im angestrebten Umfange stattfindet. Zweckmäßigerweise wird die Zusammensetzung des erfindungsgemäßen Additivs so eingestellt, dass, bezogen auf das Gesamtgewicht aus 4-basischem Bleisulfat und feinteiliger Kieselsäure, etwa 0,01 bis 10 Gew.-%, insbesondere etwa 0,02 bis 5 Gew.-% feinteilige Kieselsäure vorliegen. Ganz besonders wird der Bereich von etwa 0,05 bis 0,5 Gew.-% gewählt. Unter dem Wert von 0,01 Gew.-% feinteiliger Kieselsäure wird nicht mehr hinlänglich die Agglomeration verhindert. Bei einem Wert von mehr als 10 Gew.-% findet keine wesentliche Steigerung dieses gewünschten Effektes mehr statt.

Nach dem später noch beschriebenen erfindungsgemäßen Verfahren wird das Additiv in Form einer wässrigen Aufschlämmung erhalten. Diese wird bei noch später angesprochenen Verwendungsmöglichkeiten bevorzugt. Gleichwohl ist es möglich, die erhaltenen wässrigen Aufschlämmungen zu einem Pulver zu trocknen, wobei dieses vorzugsweise durch Sprühtrocknen der wässrigen Aufschlämmung erhalten wird. Es hat sich als vorteilhaft erwiesen, dass die angesprochene wässrige Aufschlämmung, die ohne Trocknen der angestrebten Verwendung zugeführt wird, einen Feststoffgehalt von etwa 10 bis 70 Gew.-%, insbesondere von etwa 20 bis 50 Gew.-%, aufweist. Wird der Höchstwert von 70 Gew.-% überschritten, dann ist die gleichmäßige Einarbeitung in die positive aktive Masse erschwert oder ausgeschlossen. Die Gleichmäßigkeit bzw. Homogenität der fertigen positiven aktiven Masse ist erforderlich, um durch die Reifung eine homogene Korngrößenverteilung mit enger Bandbreite zu erzielen. Theoretisch ist die untere Begrenzung des Feststoffgehaltes der erfindungsgemäßen wässrigen Aufschlämmung nur durch Pastenrezeptur bezüglich des Wassergehaltes limitiert.

Gegenstand der Erfindung ist des weiteren ein Verfahren zur Herstellung des erfindungsgemäßen Additivs, wie es vorstehend geschildert wurde. Dieses Verfahren ist dadurch gekennzeichnet, dass 4-basisches Bleisulfat in wässrigem Medium bis auf eine Teilchengröße von weniger als etwa 3 µm nassvermahlen wird, wobei dem vermahlten oder dem zu vermahlenden 4-basischen Bleisulfat feinteilige Kieselsäure der vorstehend beschriebenen Art zugemischt wird. Dabei erfolgt das Nassvermahlen vorzugsweise in Rührwerkskugelmühlen, insbesondere in geschlossenen Rührwerkskugelmühlen. Die geschlossenen Rührwerkskugelmühlen zeigen den Vorteil, dass die Mahlenergie optimiert eingebracht wird.

Nachfolgend sollen das erfindungsgemäße Verfahren sowie die vorteilhaften Verwendungen des erfindungsgemäßen Additivs noch näher erläutert werden, auch im Hinblick auf erzielbare Vorteile:

Erfindungsgemäß wird durch Vermahlung von 4-basischem Bleisulfat in wässrigem Medium unter Zugabe spezieller feinteiliger Kieselsäure eine Aufschlämmung, die im Folgenden "Mikrosulfat" genannt werden soll, erzeugt. Ein handelsübliches 4-basisches Bleisulfat oder ein aus 4-basisch gereiften Platten gewonnenes 4-basisches Bleisulfat wird als Ausgangssubstanz in einem Nassmahlverfahren, z.B. mit Rührwerkskugelmühlen, insbesondere in der geschlossenen Form, vorzugsweise auf eine mittlere Kristallgröße von weniger als 1 µm, vermahlen. Wesentlicher Punkt ist hierbei, dass der bezüglich der "Kieselsäure" angesprochene zusätzlichen Parameter eingehalten werden. So muß die Kieselsäure feinteilig sein. Vorzugsweise hat sie hydrophoben Charakter. Bevorzugt wird hierbei die angesprochene pyrogene Kieselsäure. Die pyrogene Kieselsäure zeigt den besonderen Vorteil, dass sie eine wünschenswerte Reinheit aufweist, so dass keine Fremdstoffe den Betrieb des Bleiakkumulators stören. Es ist dabei vorteilhaft, die feinteilige Kieselsäure schon im Ansatz dem zu mahlenden 4-basischen Bleisulfat zuzugeben. Allerdings ist auch eine Nachdosierung in einer geeigneten Dosieranlage möglich. Dies führt jedoch zu zusätzlichem wirtschaftlichen Aufwand und einer Verlängerung der gesamten Prozesszeit.

Es ist technisch vorteilhaft, beim Nassmahlprozess erzeugte Aufschlämmungen als Zugabe zum Mischprozess der aktiven positiven Massen bei der Herstellung der Bleiakkumulatoren zu verwenden. So kann die Aufschlämmung leicht mittels einer einfachen Dosiereinrichtung dem Mischprozess zugegeben werden. Eine Trocknung und Erzeugung eines Pulvers aus der Aufschlämmung ist möglich und in speziellen Anwendungsfällen sinnvoll, insbesondere im Rahmen einer Sprühtrocknung. In Folge des zusätzlichen Aufwandes und der Beachtung der Vorschriften des Arbeitsschutzes ist im allgemeinen im Hinblick auf mögliche Staubbelastungen die Erzeugung eines Pulvers gegenüber dem Einsatz einer wässrigen Aufschlämmung nicht zu empfehlen.

Mit dem erfindungsgemäßen Gedanken, wie er vorstehend dargestellt wurde, ist auch in gutem Einklang die weitergehende erfindungsgemäße Lehre, wonach die feinteilige Kieselsäure, insbesondere in hydrophober und/oder hydrophiler Form, insbesondere in pyrogener Form in Verbindung mit feinteiligem 4-basischen Bleisulfat einer mittleren Teilchengröße von weniger als etwa 3 µm verwendet wird und diese beiden Komponenten einer positiven aktiven Masse für Bleiakkumulatoren zugegeben werden. Dabei werden die beiden Komponenten vorzugsweise nacheinander in die positive aktive Masse für Bleiakkumulatoren gegeben, wobei es besonders bevorzugt ist, zunächst das feinteilige 4-basische Bleisulfat und dann die feinteilige Kieselsäure der positiven Masse zuzugeben. Eine derartige Vorgehensweise erfordert in der Regel eine erhöhte Zugabe von feinteiliger Kieselsäure.

Nach Zugabe der erfindungsgemäß erhaltenen Aufschlämmung zu der positiven aktiven Masse während des Mischprozesses entsteht bei der anschließenden Reifung bei den nachfolgend genannten Ausführungsformen besonders kleinkristallines 4-basisches Bleisulfat. Hieraus resultiert der Vorteil, dass die bestehenden Anlagen ohne Änderungen bei Einsatz des erfindungsgemäßen Additivs mit Vorteil genutzt werden können. Dabei ist es bevorzugt, dass das oben beschriebene Additiv in der positiven aktiven Masse für die Reifung und Trocknung von vereinzelten und nicht vereinzelten Platten bei der Herstellung von Bleiakkumulatoren verwendet wird. Besonders vorteilhaft erfolgt die Reifung der Platten in Stapeln, liegend, stehend oder hängend, unter Dampfeinwirkung bei einer Temperatur von etwa mehr als 60°C, insbesondere bei einer Temperatur von etwa 80 bis 95°C, innerhalb von etwa 1 Stunde. Gute Ergebnisse werden auch erzielt, wenn die Reifung der Platten in Stapeln, liegend, stehend oder hängend, in Chargenkammern oder unter Dampfeinwirkung bei Temperaturen unterhalb etwa 60°C und innerhalb von 12 bis 24 Stunden durchgeführt wird.

Die Reifung der Platten kann jedoch auch in einem kontinuierlichen Reifungs- und Trocknungsprozess erfolgen. Besonders gute Ergebnisse werden dabei erzielt, wenn die Reifung der Platten in Stapeln, liegend, stehend oder hängend, in einem kontinuierlichen Reifungs- und Trocknungsprozess unter Dampfeinwirkung innerhalb etwa 1 Stunde bei etwa 80 bis 95°C durchgeführt wird. Bei dem beschriebenen kontinuierlichen Reifungs- und Trocknungsprozess ist es besonders bevorzugt, dass die Reifung und Trocknung in einer mehrstufigen Trocknung bei ansteigenden Temperaturen erfolgt. Als besonders vorteilhaft hat es sich dabei erwiesen, dass die Trocknung bei ansteigenden Temperaturen bei etwa 50°C beginnt und ansteigend bis auf etwa 90°C, während etwa 1 bis 4 Stunden, insbesondere während etwa 2 bis 3 Stunden, durchgeführt wird.

Die gute Verteilbarkeit der 4-basischen Impfkristalle in der positiven aktiven Masse durch die feinteiligen Kieselsäuren führt bei der Reifung zu einer 4-basischen Kristallstruktur, die durch eine besonders enge Bandbreite an Kristallgrößen gekennzeichnet ist und sehr homogen zusammengesetzt ist. Dies gilt für Platten im Stapel als auch für gelockerte Platten bei der Reifung. Durch die enge Bandbreite an 4-basischen Kristallgrößen wird eine höhere Oberfläche bei gleichem Porenvolumen erreicht, anders ausgedrückt, ein höheres Porenvolumen bei gleicher Oberfläche der 4-basischen Kristalle erzielt. Der Vorteil besteht in einer Vergrößerung der Aufnahmemenge an Schwefelsäure in den freien Poren der Platte. Hierdurch verbessern sich die elektrischen Leistungsdaten. Für den Anwender von Mikrosulfat ergibt sich als wirtschaftlicher Vorteil die Möglichkeit der Einsparung an aktiver positiver Masse bei gleichen Leistungsdaten der Bleiakkumulatoren.

Bei der Anwendung der erfindungsgemäßen Lehre wird das gesamte Spektrum heutiger Anlagentechnik und üblicher Prozessabläufe abgedeckt. Heutige Pastierlinien mit den nachgeschalteten Stapelanlagen sowie alle gängigen Reifungs- und Trocknungskammern sind ohne Modifikation einsetzbar. Darüber hinaus kann künftig eine kontinuierliche Reifungs- und Trocknungstechnik in einem Gesamtzeitraum von etwa 3 bis 4 Stunden dargestellt werden. In allen angesprochenen Anwendungsfällen treten als Endprodukt kleinkristalline 4-basische Bleisulfate mit Kristallgrößen von weniger als 10 µm auf. Die so erzeugten Platten sind ebenso leicht zu formieren, wie aus 3-basischen Bleisulfaten gefertigte.

## Patentansprüche

1. Additiv zur Herstellung von positiven aktiven Massen für Bleiakkumulatoren auf der Basis feinteiligen 4-basischen Bleisulfats, **dadurch gekennzeichnet, dass** das Additiv ein 4-basisches Bleisulfat einer mittleren Teilchengröße von weniger als etwa 3 µm sowie zur Verhinderung der Agglomeration der Teilchen des 4-basischen Bleisulfats feinteilige Kieselsäure enthält.

2. Additiv nach Anspruch 1, **dadurch gekennzeichnet, dass** die feinteilige Kieselsäure hydrophob und/oder hydrophil ist.

3. Additiv nach Anspruch 1 oder 2, **dadurch gekennzeichnet, dass** die feinteilige Kieselsäure pyrogen ist.

4. Additiv nach einem der Ansprüche 1 bis 3, **dadurch gekennzeichnet, dass** die mittlere Teilchengröße des 4-basischen Bleisulfats kleiner als etwa 1,5 µm ist und insbesondere zwischen etwa 0,2 und 0,9 µm liegt.

5. Additiv nach mindestens einem der vorhergehenden Ansprüche, **dadurch gekennzeichnet, dass** die feinteilige Kieselsäure eine spezifische Oberfläche nach BET von weniger als etwa 300 m²/g, insbesondere weniger als etwa 150 m²/g aufweist.

6. Additiv nach mindestens einem der Ansprüche 1 bis 4, **dadurch gekennzeichnet, dass** die feinteilige Kieselsäure eine mittlere Teilchengröße von etwa 10 bis 120 nm, insbesondere von etwa 20 bis 80 nm, aufweist.

7. Additiv nach Anspruch 6, **dadurch gekennzeichnet, dass** die mittlere Teilchengröße der feinteiligen Kieselsäure zwischen etwa 40 und 60 nm liegt.

8. Additiv nach mindestens einem der Ansprüche 1 bis 7, **dadurch gekennzeichnet, dass** das Additiv, bezogen auf das Gesamtgewicht aus 4-basischem Bleisulfat und feinteiliger Kieselsäure, etwa 0,01 bis 10 Gew.-%, insbesondere etwa 0,02 bis 5 Gew.-%, an feinteiliger Kieselsäure enthält.

9. Additiv nach Anspruch 8, **dadurch gekennzeichnet, dass** die feinteilige Kieselsäure in einer Menge von etwa 0,05 bis 0,5 Gew.-% vorliegt.

10. Additiv nach mindestens einem der Ansprüche 1 bis 9, **dadurch gekennzeichnet, dass** das Additiv in Form einer wässrigen Aufschlämmung vorliegt.

11. Additiv nach Anspruch 10, **dadurch gekennzeichnet, dass** die wässrige Aufschlämmung einen Feststoffgehalt von etwa 10 bis 70 Gew.-%, insbesondere von etwa 20 bis 50 Gew.-%, aufweist.

12. Verfahren zur Herstellung eines Additivs nach mindestens einem der vorhergehenden Ansprüche 1 bis 11, **dadurch gekennzeichnet, dass** 4-basisches Bleisulfat in wässrigem Medium auf eine Teilchengröße von weniger als etwa 3 µm nassvermahlen wird, wobei dem zu vermahlenden oder vermahlten 4-basischen Bleisulfat feinteilige Kieselsäure, insbesondere in hydrophiler und/oder hydrophober Form, zugegeben wird.

13. Verfahren nach Anspruch 12, **dadurch gekennzeichnet, dass** die Kieselsäure pyrogene Kieselsäure ist.

14. Verfahren nach Anspruch 13, **dadurch gekennzeichnet, dass** das 4-basische Bleisulfat in Rührwerkskugelmühlen, insbesondere in geschlossenen Rührwerkskugelmühlen, nassvermahlen wird.

15. Verfahren nach mindestens einem der Ansprüche 12 bis 14, **dadurch gekennzeichnet, dass** die erhaltene wässrige Aufschlämmung des Mahlerzeugnisses durch Trocknen in ein Pulver überführt wird.

16. Verfahren nach Anspruch 15, **dadurch gekennzeichnet, dass** die wässerige Aufschlämmung sprühgetrocknet wird.

17. Verwendung des Additivs nach mindestens einem der vorhergehenden Ansprüche 1 bis 13 in der positiven aktiven Masse zur Reifung und Trocknung von vereinzelten und nicht vereinzelten Platten bei der Herstellung von Bleiakkumulatoren.

18. Verwendung nach Anspruch 17, **dadurch gekennzeichnet, dass** die Reifung der Platten in Stapeln, liegend, stehend oder hängend, unter Dampfeinwirkung bei einer Temperatur von mehr als etwa 60 °C, insbesondere bei einer Temperatur zwischen etwa 80 und 95°C, innerhalb etwa 1 Stunde durchgeführt wird.

19. Verwendung nach Anspruch 17, **dadurch gekennzeichnet, dass** die Reifung der Platten in Stapeln, liegend, stehend oder hängend, in Chargenkammern oder unter Dampfeinwirkung bei Temperaturen unterhalb etwa 60 °C und innerhalb von 12 bis 24 Stunden durchgeführt wird.

20. Verwendung nach Anspruch 17, **dadurch gekennzeichnet, dass** die Reifung der Platten in Stapeln, liegend, stehend oder hängend, in einem kontinuierlichen Reifungs- und Trocknungsprozess unter Dampfeinwirkung innerhalb etwa 1 Stunde bei etwa 80 bis 95°C durchgeführt wird.

21. Verwendung nach Anspruch 20, **dadurch gekennzeichnet, dass** die Trocknung der Platten in Stapeln, liegend, stehend oder hängend, in einem kontinuierlichen Reifungs- und Trocknungsprozess in einer mehrstufigen Trocknung bei ansteigenden Temperaturen durchgeführt wird.

22. Verwendung nach Anspruch 21, **dadurch gekennzeichnet, dass** die Trocknung bei ansteigenden Temperaturen, beginnend bei etwa 50°C und ansteigend bis auf etwa 90°C, während etwa 1 bis 4 Stunden, insbesondere während etwa 2 bis 3 Stunden, durchgeführt wird.

23. Verwendung feinteiliger Kieselsäure, insbesondere in hydrophober und/oder hydrophiler Form, in Verbindung mit feinteiligem 4-basischen Bleisulfat einer mittleren Teilchengröße von weniger als etwa 3 µm, wobei diese beiden Komponenten einer positiven aktiven Masse für Bleiakkumulatoren zugegeben werden.

24. Verwendung nach Anspruch 23, **dadurch gekennzeichnet, dass** die beiden Komponenten nacheinander in die positive aktive Masse für Bleiakkumulatoren gegeben werden.

25. Verwendung nach Anspruch 23 oder 24, **dadurch gekennzeichnet, dass** zuerst das feinteilige 4-basische Bleisulfat und dann die feinteilige Kieselsäure der positiven aktiven Masse für Bleiakkumulatoren zugegeben wird.

## Claims

1. An additive for producing positive active materials for lead accumulators and based on finely-divided tetrabasic lead sulphate, **characterised in that** the additive contains a tetrabasic lead sulphate having an average particle size of less than about 3 µm and finely divided silicic acid for preventing agglomeration of the tetrabasic lead sulphate particles.

2. An additive according to claim 1, **characterised in that** the finely divided silicic acid is hydrophobic and/or hydrophilic.

3. An additive according to claim 1 or claim 2, **characterised in that** the finely-divided silicic acid is pyrogenic.

4. An additive according to any of claims 1 to 3, **characterised in that** the average particle size of the tetrabasic lead sulphate is less than about 1.5 µm and especially between about 0.2 to 0.9 µm.

5. An additive according to at least one of the preceding claims, **characterised in that** the finely divided silicic acid has a BET specific surface of less than about 300 m²/g, especially less than about 150 m²/g.

6. An additive according to at least one of claims 1 to 4, **characterised in that** the finely divided silicic acid has an average particle size of about 10 to 120 nm, especially about 20 to 80 nm.

7. An additive according to claim 6, **characterised in that** the average particle size of the finely divided silicic acid is between about 40 and 60 nm.

8. An additive according to at least one of claims 1 to 7, **characterised in that** the additive contains about 0.01 to 10 wt.%, especially about 0.02 to 5 wt.%, of finely divided silicic acid relative to the total weight of tetrabasic lead sulphate and finely divided silicic acid.

9. An additive according to claim 8, **characterised in that** the finely divided silicic acid is present in a proportion of about 0.05 to 0.5 wt.%.

10. An additive according to at least one of claims 1 to 9, **characterised in that** the additive is in the form of an aqueous suspension.

11. An additive according to claim 10, **characterised in that** the aqueous suspension has a solids content of about 10 to 70 wt.%, especially about 20 to 50 wt.%.

12. A method of producing an additive according to at least one of the preceding claims 1 to 11, **characterised in that** tetrabasic lead sulphate in an aqueous medium is wet-ground to a particle size of less than about 3 µm, wherein finely divided silicic acid, especially in hydrophilic and/or hydrophobic form, is added to the tetrabasic lead sulphate for grinding or after grinding.

13. A method according to claim 12, **characterised in that** the silicic acid is pyrogenic silicic acid.

14. A method according to claim 13, **characterised in that** the tetrabasic lead sulphate is wet-ground in agitating ball mills, especially in closed agitating ball mills.

15. A method according to any of claims 12 to 14, **characterised in that** the aqueous suspension of the ground product obtained is converted into a powder by drying.

16. A method according to claim 15, **characterised in that** the aqueous suspension is spray-dried.

17. Use of the additive according to at least one of the preceding claims 1 to 13 in the positive active material for maturing and drying separated or non-separated plates during production of lead accumulators.

18. A method according to claim 17, **characterised in that** the plates are matured in stacks, lying, standing or hanging, under the action of water vapour at a temperature of more than about 60°C, especially at a temperature between about 80 and 95°C, within about 1 hour.

19. Use according to claim 17, **characterised in that** the plates are matured in stacks, lying, standing or hanging, in batch chambers or under the action of water vapour at temperatures below about 60°C and within 12 to 24 hours.

20. Use according to claim 17, **characterised in that** the plates are matured in stacks, lying, standing or hanging, in a continuous maturation and drying process under the action of water vapour at about 80 to 95°C and within about 1 hour.

21. Use according to claim 20, **characterised in that** the plates are dried in stacks, lying, standing or hanging, in a continuous maturation and drying process with multistage drying at rising temperatures.

22. Use according to claim 21, **characterised in that** drying is effected at rising temperatures, beginning at about 50°C and rising to about 90°C, for 1 to 4 hours, especially about 2 to 3 hours.

23. Use of finely divided silicic acid, especially in hydrophobic and/or hydrophilic form, in conjunction with finely divided tetrabasic lead sulphate having an average particle size of less than about 3 µm, wherein these two components are added to a positive active material for lead accumulators.

24. Use according to claim 23, **characterised in that** the two components are successively added to the positive active material for lead accumulators.

25. Use according to claim 23 or claim 24, **characterised in that** first the finely divided tetrabasic lead sulphate and then the finely divided silicic acid is added to the positive active material for lead accumulators.

## Revendications

1. Additif destiné à la production de matières actives positives pour accumulateurs au plomb à base de sulfate de plomb tétrabasique finement divisé, **caractérisé en ce qu'**il contient un sulfate de plomb tétrabasique en particules de diamètre moyen inférieur à environ 3 µm, ainsi que de la silice finement divisée destinée à empêcher l'agglomération des particules de sulfate de plomb tétrabasique.

2. Additif suivant la revendication 1, **caractérisé en ce que** la silice finement divisée est hydrophobe et/ou hydrophile.

3. Additif suivant la revendication 1 ou 2, **caractérisé en ce que** la silice finement divisée est pyrogène.

4. Additif suivant l'une des revendications 1 à 3, **caractérisé en ce que** le diamètre moyen des particules du sulfate de plomb tétrabasique est inférieur à environ 1,5 µm et en particulier compris entre environ 0,2 et 0,9 µm.

5. Additif suivant au moins l'une des revendications précédentes, **caractérisé en ce que** la silice finement divisée présente une surface spécifique déterminée selon la méthode BET de moins d'environ 300 m²/g, notamment de moins d'environ 150 m²/g.

6. Additif suivant au moins l'une des revendications 1 à 4, **caractérisé en ce que** la silice finement divisée a un diamètre moyen de particules d'environ 10 à 120 nm, en particulier d'environ 20 à 80 nm.

7. Additif suivant la revendication 6, **caractérisé en ce que** le diamètre moyen des particules de silice finement divisée se situe entre environ 40 et 60 nm.

8. Additif suivant au moins l'une des revendications 1 à 7, **caractérisé en ce qu'**il contient environ 0,01 à 10 % en poids, notamment entre environ 0,02 et 5 % en poids de silice finement divisée, par rapport au poids total de sulfate de plomb tétrabasique et de silice finement divisée.

9. Additif suivant la revendication 8, **caractérisé en ce que** la silice finement divisée est présente en une quantité d'environ 0,05 à 0,5 % en poids.

10. Additif suivant au moins l'une des revendications 1 à 9, **caractérisé en ce qu'**il se présente sous forme d'une suspension aqueuse.

11. Additif suivant la revendication 10, **caractérisé en ce que** la suspension aqueuse présente une teneur en matière solide d'environ 10 à 70 % en poids, notamment d'environ 20 à 50 % en poids.

12. Procédé de production d'un additif suivant au moins l'une des revendications 1 à 11 précédentes, **caractérisé en ce que** du sulfate de plomb tétrabasique est broyé par voie humide en milieu aqueux à un diamètre de particules de moins d'environ 3 µm, le sulfate de plomb tétrabasique à broyer ou broyé est additionné de silice finement divisée, notamment sous la forme hydrophile et/ou hydrophobe.

13. Procédé suivant la revendication 12, **caractérisé en ce que** la silice est de la silice pyrogène.

14. Procédé suivant la revendication 13, **caractérisé en ce que** le sulfate de plomb tétrabasique est broyé par voie humide dans des broyeurs à boulets équipés d'un agitateur, en particulier dans des broyeurs fermés à boulets, équipés d'un agitateur.

15. Procédé suivant au moins l'une des revendications 12 à 14, **caractérisé en ce que** la suspension aqueuse des produits de broyage obtenue est transformée par séchage en une poudre.

16. Procédé suivant la revendication 15, **caractérisé en ce que** la suspension aqueuse est séchée par pulvérisation.

17. Utilisation de l'additif suivant au moins l'une des revendications 1 à 13 précédentes dans la matière active positive de maturation et de séchage de plaques individuelles et non individuelles dans la fabrication d'accumulateurs au plomb.

18. Utilisation suivant la revendication 17, **caractérisée en ce que** la maturation des plaques est effectuée en piles, horizontalement, verticalement ou par suspension, sous l'action de la vapeur à une température supérieure à environ 60°C, en particulier à une température comprise entre environ 80 et 95°C, en 1 heure environ.

19. Utilisation suivant la revendication 17, **caractérisée en ce que** la maturation des plaques est effectuée en piles, horizontalement, verticalement ou par suspension, dans des chambres à charges ou sous l'action de la vapeur à des températures inférieures à environ 60°C et en une période de temps de 12 à 24 heures.

20. Utilisation suivant la revendication 17, **caractérisée en ce que** la maturation des plaques est effectuée en piles, horizontalement, verticalement ou par suspension, au cours d'un processus continu de maturation et de séchage sous l'action de la vapeur en 1 heure environ à une température d'environ 80 à 95°C.

21. Utilisation suivant la revendication 20, **caractérisée en ce que** le séchage des plaques est effectué en piles, horizontalement, verticalement, ou par suspension, au cours d'un processus continu de maturation et de séchage, avec séchage étagé à des températures croissantes.

22. Utilisation suivant la revendication 21, **caractérisée en ce que** le séchage est effectué à des températures croissantes, partant d'environ 50°C et s'élevant jusqu'à environ 90°C, pendant environ 1 à 4 heures, notamment pendant environ 2 à 3 heures.

23. Utilisation de silice finement divisée, notamment sous la forme hydrophobe et/ou sous la forme hydrophile, en liaison avec du sulfate de plomb tétrabasique finement divisé en particules de diamètre moyen inférieur à environ 3 µm, ces deux composants étant ajoutés à une matière active positive pour accumulateurs au plomb.

24. Utilisation suivant la revendication 23, **caractérisée en ce que** les deux composants sont incorporés successivement à la matière active positive pour accumulateurs au plomb.

25. Utilisation suivant la revendication 23 ou 24, **caractérisée en ce que** le sulfate de plomb tétrabasique finement divisé est ajouté le premier, suivi de la silice finement divisée, à la matière active positive pour accumulateurs au plomb.
